# FASCICULE DE BREVET EUROPEEN

(11) **EP 0 854 966 B1**
(45) Date de publication et mention de la délivrance du brevet: **10.12.2003**
(21) Numéro de dépôt: 97936718.2
(22) Date de dépôt: 31.07.1997
(51) Int. Cl.: E06B 3/663, E06B 3/673

(54) **PROCEDE POUR REALISER LE VIDE ENTRE DEUX FEUILLES DE VERRE D'UN VITRAGE ISOLANT**
HERSTELLUNGSVERFAHREN FÜR EINE AUS ZWEI GLASSCHEIBEN BESTEHENDE ISOLIERVERGLASUNG
METHOD FOR PRODUCING A VACUUM BETWEEN TWO GLASS SHEETS OF AN INSULATING GLAZING

(30) Priorité: 31.07.1996 FR 9609632
(43) Date de publication de la demande: 29.07.1998
(73) Titulaire: SAINT-GOBAIN GLASS FRANCE, 92400 Courbevoie (FR); Danish Technological Institute, 2630 Taastrup (DK)
(72) Inventeur: POIX, René, F-60400 Noyon (FR); MARGERAND, Stéphane, F-77100 Nanteuil Les Meaux (FR); DEMARS, Yves, F-60600 Clermont Gicourt (FR); MOLTKE, Ivar, DK-2880 Bagsvaerd (DK); BREDSDORFF, Mikael, DK-2100 Copenhague (DK); BEZZEL, Eik, DK-3460 Birkerod (DK)
(74) Mandataire: Renous Chan, Véronique
(86) Numéro de dépôt international: FR9701430
(87) Numéro de publication internationale: WO98004802

(56) Documents cités:
- EP-A- 0 421 239
- EP-A- 0 645 516
- WO-A-87/03327
- WO-A-91/02878
- WO-A-96/12862
- US-A- 4 683 154

## Description

L'invention concerne un procédé pour réaliser le vide entre deux feuilles de verre et un vitrage isolant ainsi réalisé.

Le procédé selon l'invention, s'il ne se limite pas à la réalisation de vitrage isolant sera décrit plus particulièrement en référence à cette application.

Il est usuel pour obtenir une isolation thermique et/ou acoustique de réaliser des vitrages isolants comportant deux feuilles de verre séparées l'une de l'autre par une lame d'air relativement importante. De tels vitrages apportent une isolation thermique jugée insuffisante pour certaines applications. Pour y remédier, il est connu de réaliser des vitrages comportant trois feuilles de verre et l'une des lames d'air pouvant être remplacée par un gaz, par exemple le krypton. Ces vitrages ont des propriétés d'isolation thermique nettement améliorées, mais sont d'une épaisseur telle qu'il n'est pas toujours aisé de les utiliser.

Par ailleurs, la demande actuelle des utilisateurs s'oriente vers une isolation thermique des vitrages équivalente à celle des parois pleines, c'est-à-dire des murs.

Il a déjà été proposé notamment dans le brevet WO-91/02878 des vitrages isolants constitués de deux feuilles de verre séparées l'une de l'autre par un espace dans lequel le vide a été réalisé.

Ces vitrages procurent du fait du vide une très bonne isolation mais ils sont très difficiles à réaliser. D'une part, la faible épaisseur entre les deux feuilles de verre qui est de quelques dixièmes de millimètres doit être constante sur toute la zone où les feuilles de verre sont en regard.

D'autre part, il faut réaliser un scellage des deux feuilles de verre parfaitement étanche.

Le brevet WO-91/02878 décrit une technique consistant à placer des plots de quelques dixièmes de millimètres d'épaisseur sur l'une des feuilles de verre, répartis sur toute la surface et dans le même temps un joint qui permettra le scellage des deux feuilles. Ces plots et ce joint sont réalisés dans la même matière qui est une composition verrière. Il apparaît que ce vitrage est difficile à réaliser du fait de ces opérations simultanées qui nécessitent des opérations délicates.

D'autre part, le joint de scellage présente un nombre de bulles qui peuvent être néfastes à l'étanchéité et à l'esthétique.

Ce brevet décrit également un procédé pour réaliser le vide entre les deux feuilles de verre. Il propose notamment d'insérer un tube entre les deux feuilles de verre avant le scellage, sur lequel on vient se raccorder pour pomper l'air. Une autre réalisation consiste à percer un trou au travers de l'une des feuilles de verre et de pomper l'air à travers cet orifice.

Dans le premier cas, il est nécessaire de sceller le tube de façon étanche en même temps que les feuilles de verre, ce qui rend difficile les opérations. De plus, il faut, après avoir fait le vide, sceller l'extrémité du tube, puis protéger cette extrémité pour éviter sa casse.

Dans le second cas, le vide est réalisé par l'intermédiaire d'un tube préalablement scellé autour du trou. Puis après avoir réaliser le vide, ce tube est fondu de façon à sceller son extrémité. L'inconvénient de ces réalisations est de fournir un vitrage isolant présentant un point fragile soit sur la périphérie, soit sur une surface. Dans le second cas, il subsiste de plus une partie du tube à l'extérieur du vitrage, ce qui augmente les risques de détérioration.

L'invention a pour but un procédé pour réaliser le vide entre deux feuilles de verre, simple de réalisation, et le vitrage réalisé ne présentant avantageusement pas de point fragile.

Ce but est atteint selon l'invention par un procédé de fabrication d'un vitrage isolant sous vide constitué de deux feuilles de verre et entre lesquelles le vide est réalisé, l'une des feuilles de verre comportant un trou percé dans son épaisseur, consistant après avoir déposé des espaceurs entre les deux feuilles de verre, à réaliser un joint de scellage en périphérie des feuilles de verre, à effectuer ensuite simultanément le scellage périphérique et un collage des espaceurs avec de l'émail sur la première feuille de verre par élévation de la température, et à effectuer le vide et à obturer ledit trou, caractérisé en ce que des espaceurs indépendants d'un émail de collage sont fixés sur une seule feuille de verre par collage avec l'émail, le collage des espaceurs étant réalisé par dépôts successifs de plots d'émail sur une feuille de verre puis des espaceurs sur les plots, en ce qu'on dépose sans collage la seconde feuille de verre sur les espaceurs et sur le joint de scellage périphérique.

Notamment cette réalisation avec un émail comme composé minéral de collage selon l'invention est d'une part simplifiée parce que la seconde feuille de verre peut venir simplement en appui sur les espaceurs solidaires de la première feuille de verre. Cela autorise une précision de dépôt de la seconde feuille de verre moins rigoureuse que selon les techniques connues, celle-ci pouvant être légèrement corrigée par exemple par glissement. Par ailleurs, à ce stade du procédé l'émail n'a pas encore été cuit mais les pâtes d'émail usuelles présentent une viscosité suffisante pour maintenir en place les espaceurs, plus particulièrement après séchage de la pâte d'émail, durant la phase de mise en place et de positionnement de la feuille de verre. De plus, une variante peut prévoir que le joint de scellage soit avantageusement mis en place après la seconde feuille de verre, toujours pour faciliter le positionnement de celle-ci.

D'autre part, l'invention prévoit d'effectuer simultanément le scellage et la cuisson de l'émail de collage, ce qui limite le nombre d'étapes du procédé. De préférence, l'émail de collage est identique au joint de scellage ; dans le cas contraire les températures de cuisson sont avantageusement choisies voisines.

Selon une première variante de réalisation de l'invention, le collage des espaceurs est réalisé par dépôts successifs de plots de composé minéral de collage par exemple par-sérigraphie puis des espaceurs par un outillage aspirant percé de trous plus petits que lesdits espaceurs au même pas que les plots obtenus.

Le dépôt des plots de composé minéral de collage peut être réalisé par tout type de moyens connus de l'homme du métier permettant de réaliser des plots d'un diamètre de l'ordre de 0,5 mm et d'une épaisseur de quelques dizaines de microns et de les disposer très précisément avec un pas régulier. Un tel pas autorise notamment un nombre de plots avantageusement compris entre 600 et 1500 au mètre carré et de préférence égal à 1000 au mètre carré.

De préférence, l'outillage aspirant prélève et transporte les espaceurs préalablement disposés sur un plateau et les dépose sur les plots de composé minéral par arrêt de l'aspiration et éventuellement par soufflage.

Les espaceurs selon l'invention ont avantageusement une forme sphérique bi-tronquée à faces parallèles. Une telle forme permet de placer tous les espaceurs sur un plateau dans la même position par exemple en faisant vibrer le plateau ; en effet la partie ventrue des espaceurs a tendance à ramener ceux-ci sur l'une des faces parallèles. De plus, la forme décrite précédemment associée à l'outillage aspirant autorise une bonne préhension des espaceurs et un dépôt précis de ceux-ci, l'une de leurs faces plates assurant une bonne stabilité y compris avant la cuisson de l'émail de collage. De tels espaceurs présentent avantageusement une distance entre les faces parallèles comprise entre 0,1 et 0,3 millimètre et un diamètre au niveau de la partie ventrue inférieure à 0,5 millimètre.

Selon une seconde variante de réalisation du procédé selon l'invention, le collage des espaceurs est réalisé par dépôt desdits espaceurs sur la surface d'une feuille de verre, lesdits espaceurs étant préalablement recouverts sur la zone venant au contact du verre, du composé minéral de collage.

De préférence, les espaceurs sont véhiculés par un outillage aspirant qui durant le transport trempe la zone concernée des espaceurs dans une composition du composé minéral de collage puis sont déposés sur le verre, ceux-ci étant déjà recouverts dudit composé minéral de collage sur la zone voulue.

Concernant la phase de scellage, durant laquelle s'effectue simultanément le collage des espaceurs, le procédé selon l'invention prévoit avantageusement d'exercer une pression entre les deux feuilles de verre. Une telle pression assure la mise à hauteur du joint de scellage à celle des espaceurs. En effet, le joint de scellage est initialement déposé avec une épaisseur supérieure à celle des espaceurs et est ainsi ramené à l'épaisseur voulue par écrasement.

Concernant l'obturation du trou prévu dans l'épaisseur d'une des feuilles de verre pour réaliser le vide, l'invention prévoit un obturateur maintenu à proximité du trou de façon à laisser passer l'air et soudable sur le verre. Un tel obturateur est avantageusement réalisé en verre ou en métal. La liaison entre l'obturateur et la feuille de verre est de préférence obtenue par une soudure minérale, telle qu'un émail ou une fritte de verre, dont le point de fusion est inférieur à ceux du verre et de l'obturateur. Selon une réalisation préférée, avant l'étape de réalisation du vide, on dépose une couronne d'émail à base d'argent autour du trou, et qu'après cuisson, ladite couronne est étamée et enfin partiellement soudée à un disque minéral étamé. La cuisson de l'émail d'argent est avantageusement réalisée soit simultanément à celle de l'émail de collage, soit pendant une étape de trempe thermique si une telle étape est effectuée.

Une telle réalisation permet de disposer à proximité du trou le disque destiné à le boucher, tout en maintenant le trou ouvert et autorisant la réalisation du vide par exemple par l'intervention d'une cloche disposée autour du trou.

Selon cette configuration, au cours de la phase de réalisation du vide, on élève la température localement autour du trou jusqu'à la fusion de l'étain. On obtient ainsi la soudure du disque sur la feuille de verre et l'obturation du trou, le vide étant réalisé entre les deux feuilles de verre.

L'assemblage des deux feuilles de verre entre lesquelles le vide a été réalisé est simple de mise en oeuvre. Par ailleurs, l'obturation du trou par lequel le vide est réalisé ne constitue pas un point fragile et est relativement discret ; la surépaisseur obtenue au niveau du trou peut être inférieure à 1 mm.

Selon une variante de l'invention, un anneau métallique étamé est lié au verre par un verre de soudure en remplacement de l'émail à base d'argent. Cette variante conduit à une surépaisseur légèrement supérieure.

Les techniques d'obturation du trou qui viennent d'être décrites conviennent tout-à-fait à la technique d'assemblage des feuilles de verre précédemment décrites et plus particulièrement au choix et à la mise en place des espaceurs ainsi qu'à la réalisation du scellage périphérique ; toutefois, l'invention n'exclut pas la possibilité d'associer la technique d'obturation d'un trou pour faire le vide à d'autres types d'assemblages.

L'invention propose également un vitrage isolant sous vide pouvant notamment être réalisé selon le procédé décrit précédemment.

Selon l'invention, le vitrage isolant sous vide est constitué de deux feuilles de verre maintenues espacées l'une de l'autre par des espaceurs et un joint de scellage périphérique, lesdits espaceurs étant des sphères bi-tronquées à faces parallèles en matière céramique. Les feuilles ont avantageusement subi un traitement de trempe pour renforcer leurs propriétés mécaniques. De préférence, il s'agit d'un traitement de trempe thermique qui conduit à des contraintes de compression sur une épaisseur relativement importante. Les espaceurs sont par exemple réalisés à partir d'une phase cristalline de zircone dans une phase vitreuse de silice.

Selon une réalisation préférée de l'invention, les sphères bi-tronquées à faces parallèles sont obtenues à partir de billes noyées dans un matériau que l'on peut couler et que l'on peut séparer facilement des espaceurs ultérieurement par exemple par des actions thermiques et/ou chimiques et/ou mécaniques. Un tel matériau est par exemple de l'étain, un alliage métallique, un liant organique, un liant tel que le plâtre, ... Les billes sont noyées dans ledit matériau de façon à former une monocouche, ladite couche étant érodée sur ses deux faces. Les billes utilisées sont par exemple des billes habituellement utilisées pour le nettoyage des moules de verrerie par sablage.

De préférence également, le joint de scellage est un émail dont la température de cuisson est inférieure à 450°C. La température atteinte ne doit notamment par entraîner un relâchement des contraintes obtenues par trempe.

Le vitrage selon l'invention peut également comporter en surface extérieure un disque ou pastille minéral soudé au verre. Comme décrit précédemment, un tel disque est utilisé pour obturer le trou ayant servi à faire le vide. Ce disque est de préférence placé sur le bord du vitrage par souci de discrétion et notamment pour être masqué par les dispositifs de montage.

La soudure du disque est avantageusement réalisée à l'étain et le contact sur le verre se fait par l'intermédiaire d'une couche d'émail à base d'argent.

Selon d'autres réalisations avantageuses, l'invention prévoit d'utiliser au moins une feuille de verre recouverte d'une ou plusieurs couches fonctionnelles, sur au moins l'une de ses faces. De telles couches sont par exemple des couches basses émissives telles que décrites dans le brevet français FR-2 701 474. Dans le cas où une couche de ce type est réalisée sur la face interne du vitrage, c'est-à-dire une face ultérieurement au contact du vide, l'invention prévoit de préférence l'élimination de ladite couche sur la zone périphérique de la surface correspondant à la zone recouverte par le joint de scellage ; cette élimination peut permettre une meilleure adhérence dudit joint.

D'autres détails et caractéristiques avantageuses de l'invention ressortiront ci-après de la description d'un exemple de réalisation selon l'invention, faite en référence aux figures qui représentent :
- **Figure 1** : une vue de dessus d'un schéma d'un vitrage isolant selon l'invention,
- **Figure 2** : une vue de côté en élévation d'un schéma du vitrage de la figure 1,
- **Figure 3** : une vue de côté d'un espaceur selon l'invention,
- **Figures 4a, b, c** : des schémas illustrant les étapes successives de dépôt des espaceurs selon l'invention,
- **Figure 5** : une vue de côté en élévation d'un schéma d'un dispositif selon l'invention pour effectuer le vide et obturer le trou.

Les différentes figures ne sont pas représentées à l'échelle pour en simplifier la compréhension.

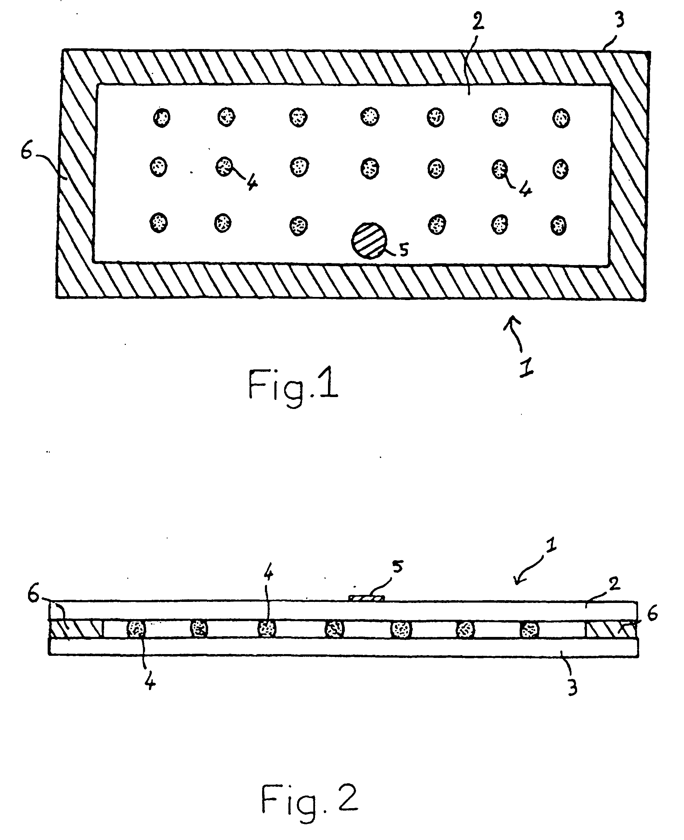

Sur la figure 1 est représentée une vue de dessus d'un schéma d'un vitrage isolant sous vide 1. Celui-ci se compose de deux feuilles de verre 2, 3 maintenues à distance l'une de l'autre par des espaceurs 4 visibles en transparence sur la figure 1. Les feuilles de verre ont une épaisseur de 4 mm et ont préalablement subi un traitement de trempe thermique en vue du renforcement de leurs propriétés mécaniques afin qu'elles supportent les contraintes qui s'exercent lors de la réalisation du vide.

Sur la figure 1, il apparaît que ces espaceurs sont répartis sur toute la surface du vitrage de façon régulière. Ils sont distants les uns des autres d'une distance de 30 millimètres. Cette répartition des espaceurs 4 permet de maintenir un espace entre les feuilles de verre 2, 3. leur nombre, dimension et répartition sont déterminés pour garantir une bonne résistance du vitrage et prévenir tout risque de contact entre les feuilles de verre 2 et 3 et de façon à ne pas créer de pont thermique trop important et ne pas gêner la transmission lumineuse.

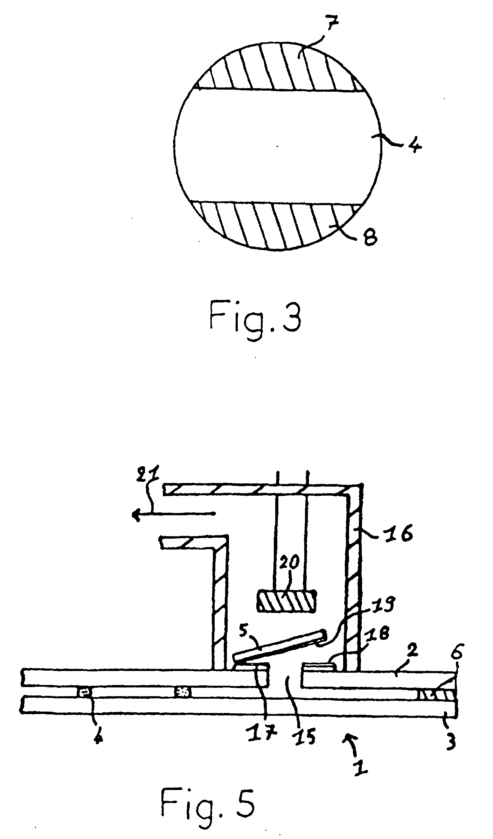

Par ailleurs, les espaceurs 4 sont réalisés en zircone. Les espaceurs 4 possèdent ainsi différentes propriétés nécessaires pour leur utilisation et plus particulièrement une faible conductivité thermique qui permet d'éviter la création de pont thermique entre les deux feuilles de verre 2, 3. Ils présentent également une bonne résistance à la compression et une bonne ténacité assurant une bonne tenue du vitrage durant la réalisation du vide puis lors de son utilisation. Sur les figures 2, 3, les espaceurs 4 apparaissent avec une forme sphérique bi-tronquée à faces parallèles. Il sera revenu ultérieurement sur la méthode de réalisation de tels espaceurs ainsi que sur les avantages que leur forme apporte pour la manutention et la mise en place desdits espaceurs. Concernant leur fonction qui est de maintenir un espace entre les deux feuilles de verre 2, 3, il apparaît que les surfaces planes au contact du verre évitent un contact ponctuel tel que celui d'une bille et confère une plus grande stabilité une fois positionné.

Par ailleurs, la forme des espaceurs 4 permet de diminuer les risques de rayures des feuilles de verre ; plus particulièrement lors de la mise en place de la feuille de verre 2 à laquelle les espaceurs 4 ne sont pas collés, la forme des espaceurs et notamment l'absence d'angle vif évite une dégradation de ladite feuille de verre 2.

La forme des espaceurs et notamment leur partie ventrue contribue encore à améliorer la résistance mécanique desdits espaceurs, notamment du fait d'une meilleure répartition des forces.

Sur les figures 1 et 2 apparaît également le disque 5 qui bouche le trou ayant servi à faire le vide dans le vitrage 1. Ce disque est réalisé en cuivre. Il peut être positionné n'importe où sur le vitrage et de préférence sur un bord par souci de discrétion. De préférence encore, il est situé au centre d'une grande longueur du vitrage comme représenté sur la figure 1 ; ceci est avantageux lors de la réalisation du vide car une telle position permet notamment de diminuer au maximum le temps de pompage pour une aspiration donnée.

Sur les figures 2, 3 apparaît encore le joint de scellage 6. Celui-ci est réalisé avec une pâte d'émail dont la température de cuisson pour éliminer les composants organiques est de l'ordre de 450°C. Cette température permet notamment d'éviter un relâchement des contraintes de trempe qui n'apparaît qu'à des températures supérieures. Lors de la réalisation du vitrage, le joint de scellage est déposé sur une largeur comprise entre 3 et 4 mm avec une épaisseur d'environ 1,5 mm. Cette épaisseur est ramenée à 0,2 mm entre les deux feuilles de verre, pour être identique à l'épaisseur des espaceurs 4, par pressage lors de la phase de cuisson. La largeur du joint est alors d'au moins 10 mm.

Concernant les espaceurs 4 et plus particulièrement la méthode d'obtention de ceux-ci, la figure 3 illustre le passage d'une bille ou sphère à la forme sphérique bi-tronquée à faces parallèles. Pour effectuer cette transformation, la bille est érodée symétriquement pour former deux faces parallèles, la matière des zones 7 et 8 étant éliminée. Cette transformation doit être très précise ; en effet, les billes utilisées présentent un diamètre de 0,4 mm et la hauteur des espaceurs 4 dans le cas présent est de 0,18 mm. Les inventeurs ont su mettre au point une technique de réalisation de ces espaceurs 4 simple, précise et conduisant à une régularité des dimensions d'un espaceur à l'autre. Cette technique consiste à noyer des billes d'un diamètre de 0,4 millimètre dans une résine organique par exemple une résine polyester. Les billes utilisées sont en oxyde de zirconium ; elles sont habituellement utilisées pour nettoyer des moules de verrerie par sablage. La résine est ensuite polymérisée après que les billes aient été disposées en monocouche par exemple par écrasement entre deux plaques de verre.

La couche de résine ainsi obtenue est ensuite érodée sur ses deux faces par polissage de façon à éliminer 0,11 mm de matière des billes de part et d'autre par rapport au diamètre initial correspondant aux zones 7 et 8. Toute autre technique mécanique, thermique ou chimique connue de l'homme du métier peut être utilisée. L'érosion terminée, la partie organique de la couche est éliminée et les espaceurs 4 ainsi formés peuvent être récupérés dans un filtre.

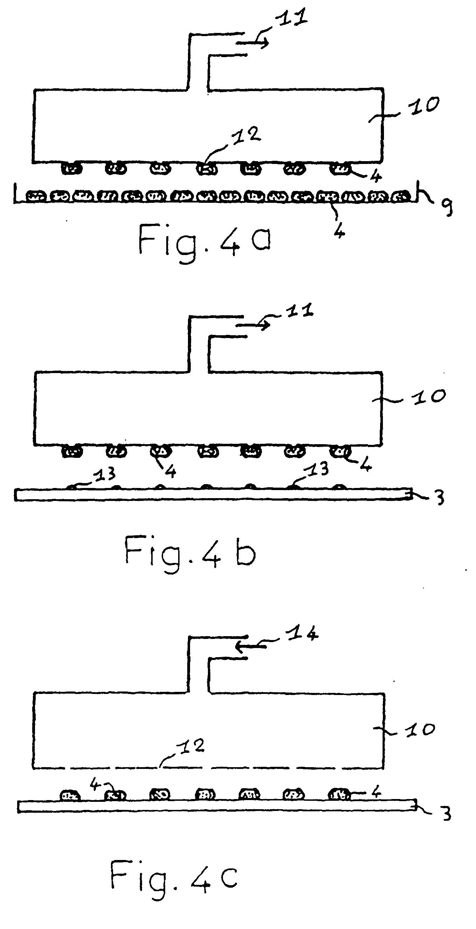

Les figures 4a, b et c illustrent notamment les avantages liés à la forme des espaceurs 4 pour le transport et le positionnement de ceux-ci. Sur la figure 4a, les espaceurs 4 ont été disposés en vrac sur un plateau 9 animé d'un mouvement vibratoire. La vibration du plateau 9 associée à la forme des espaceurs 4 conduit ceux-ci à se mettre en place eux-mêmes, l'une des faces planes étant au contact du plan horizontal du plateau 9 ; en effet, la forme sphérique bi-tronquée à faces parallèles qui assimile les espaceurs 4 à de petits tonneaux, lors de la vibration, produit un effet du type « culbuto » ramenant les espaceurs 4 en position d'équilibre stable et donc sur une face plane. Au-dessus de ce plateau est amené un outillage aspirant 10. Cet outillage est mis au contact des espaceurs 4 disposés sur le plateau 9 et du fait de l'aspiration symbolisée par la flèche 11, entraîne des espaceurs 4 avec lui. Pour cela, l'outillage 10 est muni sur sa surface inférieure d'orifices 12 répartis uniformément avec un pas de 30 mm. Les dimensions de ces orifices 12 sont telles que les espaceurs ne passent pas au travers et présentent donc un diamètre inférieur à 0,4 mm, les espaceurs 4 étant aspirés par l'une de leurs faces planes.

La figure 4b montre ensuite l'arrivée de l'outillage 10, après son déplacement, au-dessus d'une feuille de verre 3 sur laquelle des plots d'émail 13 de collage ont déjà été déposés. Ces plots 13 ont par exemple été déposés par sérigraphie avec un écran de soie. Ces plots 13 sont ainsi disposés précisément avec un pas de 30 mm, identique à celui de l'outillage 10 pour les orifices 12.

Sur la figure 4c, les espaceurs 4 sont disposés sur les plots 13. le dépôt est réalisé par arrêt de l'aspiration, les espaceurs étant au contact des plots 13 et éventuellement par un léger soufflage, symbolisé par la flèche 14. les opérations de déplacement de l'outillage 10 sont avantageusement automatisés pour assurer une superposition des espaceurs 4 et des plots 13. Les plots d'émail de collage 13 présentent une viscosité suffisante pour maintenir les espaceurs 4 en place, notamment lorsque la seconde feuille de verre 2 est déposée. Le fait que les espaceurs ne soient pas collés à la feuille de verre 2 facilitent notamment sa mise en place. De plus, l'absence de ce collage peut éviter les risques de casse lors de l'utilisation du vitrage 1 si les deux feuilles de verre ne subissent pas exactement la même dilatation.

Lors de leur dépôt, les plots 13 ont une épaisseur de plusieurs dizaines de microns. Cette épaisseur est ramenée à 20 microns par la pression exercée durant la cuisson de l'émail constituant le joint de scellage et celle des plots 13 d'émail de collage qui est réalisée simultanément. L'épaisseur correspondant à un plot 13 plus un espaceur 4 est ainsi de 0,2 mm.

Du fait de l'écrasement des plots 13, il peut se former un léger bourrelet d'émail autour de la base d'un espaceur 4. La forme des espaceurs 4 présente alors encore un avantage du fait de sa partie ventrue ; en effet, le bourrelet qui se forme remonte légèrement par capillarité le long de l'espaceur et reste masqué par le diamètre maximal de la partie ventrue, 0,4 mm dans le cas présent. De ce fait, le plot 13 est quasi-invisible en transparence au travers du vitrage 1 et les points visibles correspondant aux espaceurs 4 ont tous le même diamètre, ce qui évite une perturbation de l'oeil lors de la vision au travers de ce vitrage 1.

Après l'opération de cuisson durant laquelle à la fois l'émail périphérique de scellage 6 et l'émail de collage 13 sont cuits, il est possible d'effectuer l'opération de vide par le trou 15 prévu à cet effet puis de boucher ce trou 15 à l'aide du disque 5. Le trou 15 a été réalisé avec un chanfrein, non représenté sur les figures pour améliorer les résultats de trempe à son niveau.

La figure 5 illustre cette étape. Un outil tel qu'une cloche 16 pour effectuer le vide est appliqué sur le vitrage 1 de façon hermétique et autour du trou 15. La flèche 21 symbolise l'aspiration, effectuée pour obtenir un vide dans le vitrage 1 compris entre 10⁻³ et 10⁻⁶ Torr et de préférence de l'ordre de 10⁻⁴ Torr. Lorsque cette valeur est atteinte, il est nécessaire de boucher le trou 15 de façon hermétique. Pour cela, une couronne d'émail à base d'argent 17 a été déposée autour du trou 15. Cet émail a avantageusement été cuit simultanément à la cuisson des émaux formant le joint de scellage périphérique 6 et les plots de collage 13. Après sa cuisson, la couronne 17 est étamée et comporte ainsi une couche d'étain 18 soudée sur un bord au disque de cuivre 5 par l'intermédiaire d'une seconde couche d'étain 19. Lorsque la valeur souhaitée de vide est atteinte, l'aspiration étant maintenue, on élève la température à environ 230°C à proximité du trou 15 à l'aide d'un dispositif électrique 20 installé dans la cloche 16. Cette élévation de température autorise une fusion des couches d'étain 18 et 19 et la chute du disque 5 qui vient recouvrir le trou 15. Lorsque la température est à nouveau abaissée, le disque 5 se retrouve soudée au vitrage 1 par l'intermédiaire de la couronne d'émail 17 et de l'étain. On obtient ainsi un vitrage 1 tel que représenté aux figures 1 et 2. La méthode de réalisation de ce vitrage ainsi présenté est relativement simple de mise en oeuvre et conduit à un vitrage sous vide parfaitement hermétique et présentant une durée de vie satisfaisante.

Par ailleurs, l'efficacité d'un tel vitrage isolant peut encore être améliorée par l'utilisation d'au moins une feuille de verre revêtue d'une couche basse émissive. De telles couches sont par exemple décrites dans le brevet français publié sous le numéro 2 701 474 ; ces couches permettent dans cette application de diminuer les pertes énergétiques par rayonnement depuis l'intérieur d'un habitacle vers l'extérieur. Elles peuvent également éviter la formation de givre notamment lorsqu'elles sont placées à l'extérieur.

L'invention prévoit encore la possibilité pour certaines applications de combiner la fonction de collage des espaceurs avec par exemple une fonction de décoration. Dans de tels cas, on ne réalise plus de plots 13 d'émail, mais il peut s'agir de lignes d'émail ou de toute autre forme. Toutefois une partie de ce motif est toujours utilisée pour fixer les espaceurs qui se trouvent alors totalement masqués car ils se confondent avec le motif.

## Revendications

1. Procédé de fabrication d'un vitrage isolant sous vide (1) constitué de deux feuilles de verre (2, 3) et entre lesquelles le vide est réalisé, l'une des feuilles de verre comportant un trou (15) percé dans son épaisseur, consistant après avoir déposé des espaceurs (4) entre les deux feuilles de verre, à réaliser un joint de scellage (6) en périphérie des feuilles de verre, à effectuer ensuite simultanément le scellage périphérique et un collage des espaceurs (4) avec de l'émail sur la première feuille de verre par élévation de la température, et à effectuer le vide et à obturer ledit trou, **caractérisé en ce que** des espaceurs (4) indépendants d'un émail de collage sont fixés sur une seule feuille de verre par collage avec l'émail, le collage des espaceurs (4) étant réalisé par dépôts successifs de plots (13) d'émail sur une feuille de verre puis des espaceurs sur les plots, **en ce qu'**on dépose sans collage la seconde feuille de verre sur les espaceurs et sur le joint de scellage périphérique.

2. Procédé selon la revendication , **caractérisé en ce que** le collage des espaceurs (4) est réalisé par dépôts successifs de plots (13) d'émail par exemple par sérigraphie et des espaceurs (4) par un outillage (10) aspirant percé de trous plus petits que lesdits espaceurs au même pas que les plots obtenus.

3. Procédé selon la revendication 3, **caractérisé en ce que** l'outillage (10) aspirant prélève et transporte les espaceurs (4) préalablement disposés sur un plateau (9) et **en ce qu'**il les dépose sur les plots d'émail par arrêt de l'aspiration.

4. Procédé selon l'une des revendications précédentes, **caractérisé en ce qu'**on exerce une pression durant le scellage.

5. Procédé selon l'une des revendications 1 à 4 , **caractérisé en ce que** durant la phase de réalisation du vide, un obturateur (17, 5) est maintenu à proximité du trou de façon à laisser passer l'air et **en ce que** ledit obturateur est soudable sur le verre.

6. Procédé selon l'une des revendications 1 à 4, **caractérisé en ce qu**'avant l'étape de réalisation du vide, on réalise une couronne (17) d'émail à base d'argent autour du trou (15), en ce qu'après cuisson ladite couronne est étamée et en ce qu'elle est partiellement soudée à un disque ou pastille (5) minéral étamé.

7. Procédé selon la revendication 6, **caractérisé en ce qu**'au cours de la phase de réalisation du vide on élève la température localement autour du trou (15) jusqu'à la fusion de l'étain.

8. Procédé selon l'une quelconque des revendications précédentes, **caractérisé en ce que** les espaceurs (4) sont des sphères bi-tronquées à faces parallèles en matière céramique.

9. Procédé selon la revendication 8, **caractérisé en ce que** les sphères bi-tronquées à faces parallèles sont obtenues à partir de billes réparties en monocouche, noyées dans un matériau que l'on peut couler et que l'on peut séparer des espaceurs ultérieurement par des actions thermiques et/ou chimiques et/ou mécaniques, et **en ce que** ladite couche est érodée sur ses deux faces.

10. Procédé selon l'une quelconque des revendications précédentes, **caractérisé en ce que** le joint de scellage (6) est un émail dont la température de cuisson est inférieure à 450°C.

11. Procédé selon l'une quelconque des revendications précédentes, **caractérisé en ce qu**'au moins une des feuilles de verre (2, 3) a subi un traitement de trempe thermique.

12. Procédé selon l'une quelconque des revendications précédentes, **caractérisé en ce qu**'au moins une feuille de verre (2, 3) est recouverte d'une ou plusieurs couches fonctionnelles sur au moins l'une de ses faces.

## Patentansprüche

1. Verfahren zur Herstellung einer Vakuumisolierglasscheibe (1), die aus zwei Glasscheiben (2, 3) besteht, zwischen denen ein Vakuum erzeugt ist, und eine der Glasscheiben ein durch ihre Dicke gebohrtes Loch (15) enthält, welches darin besteht, nach dem Aufbringen von Abstandshaltern (4) zwischen den beiden Glasscheiben eine Versiegelung (6) an deren Umfang anzubringen, anschließend gleichzeitig das umfängliche Versiegeln und ein Verkleben der Abstandshalter (4) mit dem Email auf der ersten Glasscheibe durch Temperaturerhöhung durchzuführen, das Vakuum zu erzeugen und das Loch zu verschließen, **dadurch gekennzeichnet, dass** die unabhängigen Abstandshalter (4) aus einem Klebeemail auf einer einzigen Glasscheibe durch Verkleben des Emails befestigt werden und das Verkleben der Abstandshalter (4) durch sukzessives Aufbringen von Emailstiften (13) auf einer Glasscheibe und anschließend der Abstandshalter auf den Stiften realisiert wird, **und dass** die zweite Glasscheibe auf den Abstandshaltern und der umfänglichen Versiegelung ohne Verkleben angebracht wird.

2. Verfahren nach Anspruch 1, **dadurch gekennzeichnet, dass** das Verkleben der Abstandshalter (4) durch sukzessives Aufbringen von Emailstiften (13), beispielsweise mittels Siebdruck, und der Abstandshalter (4) durch ein Saugwerkzeug (10) durchgeführt wird, das mit Löchern, die kleiner als die Abstandshalter sind, durchbohrt ist, die denselben Abstand wie die erhaltenen Stifte aufweisen.

3. Verfahren nach Anspruch 2, **dadurch gekennzeichnet, dass** das Saugwerkzeug (10) die zuvor auf einer Platte (9) angeordneten Abstandshalter (4) entnimmt und transportiert, **und dass** es sie durch Unterbrechen des Saugvorgangs auf den Emailstiften ablegt.

4. Verfahren nach einem der vorhergehenden Ansprüche, **dadurch gekennzeichnet, dass** während des Versiegelns ein Druck ausgeübt wird.

5. Verfahren nach einem der Ansprüche 1 bis 4, **dadurch gekennzeichnet, dass** während der Erzeugung des Vakuums derart ein Verschluß (17, 5) in der Nähe des Lochs gehalten wird, dass Luft hindurchströmen kann, **und dass** der Verschluß mit dem Glas verlötbar ist.

6. Verfahren nach einem der Ansprüche 1 bis 4, **dadurch gekennzeichnet, dass** vor Erzeugung des Vakuums um das Loch (15) herum ein Ring (17) aus Email auf Silberbasis hergestellt wird, **und dass** dieser Ring nach dem Einbrennen verzinnt ist, und er mit einer verzinnten anorganischen Scheibe bzw. Auflagefläche (5) teilweise verlötet ist.

7. Verfahren nach Anspruch 6, **dadurch gekennzeichnet, dass** während der Erzeugung des Vakuums die Temperatur um das Loch (15) herum lokal bis zum Schmelzen des Zinns erhöht wird.

8. Verfahren nach einem der vorhergehenden Ansprüche, **dadurch gekennzeichnet, dass** die Abstandshalter (4) oben und unten abgeschnittene Keramikkugeln mit parallelen Seiten sind.

9. Verfahren nach Anspruch 8, **dadurch gekennzeichnet, dass** die oben und unten abgeschnittenen Kugeln mit parallelen Seiten aus einschichtig verteilten Kugeln erhalten werden, die in ein Material eingebettet sind, das vergossen und später durch thermische und/oder chemische und/oder mechanische Einwirkung von den Abstandshaltern abgetrennt werden kann, und dass die Schicht auf beiden Seiten erodiert wird.

10. Verfahren nach einem der vorhergehenden Ansprüche, **dadurch gekennzeichnet, dass** die Versiegelung (6) aus einem Email besteht, dessen Einbrenntemperatur weniger als 450 °C beträgt.

11. Verfahren nach einem der vorhergehenden Ansprüche, **dadurch gekennzeichnet, dass** mindestens eine der Glasscheiben (2, 3) thermisch vorgespannt worden ist.

12. Verfahren nach einem der vorhergehenden Ansprüche, **dadurch gekennzeichnet, dass** mindestens eine der Glasscheiben (2, 3) auf wenigstens einer Seite mit einer oder mehreren funktionellen Schichten überzogen ist.

## Claims

1. Method of manufacturing insulating glazing under vacuum (1), consisting of two sheets of glass (2, 3) between which the vacuum is produced, one of the sheets of glass comprising a hole (15) pierced in its thickness, consisting, after having deposited spacers (4) between the two sheets of glass, of producing a sealing joint (6) at the periphery of the sheets of glass, then simultaneously carrying out the peripheral sealing and a bonding of the spacers (4) with enamel on the first sheet of glass by raising the temperature, and producing the vacuum and closing off the said hole, **characterised in that** spacers (4) independent of a bonding enamel are fixed to only one sheet of glass by bonding with the enamel, the bonding of the spacers (4) being carried out by successive depositing of spots (13) of enamel on a sheet of glass and then spacers on the spots, **in that** the second sheet of glass is placed without bonding on the spacers and on the peripheral sealing joint.

2. Method according to Claim 1, **characterised in that** the bonding of the spacers (1) is carried out by successive depositing of spots (13) of enamel, for example by screen printing, and spacers (4) by a suction tool (10) with holes in it smaller than the said spacers at the same pitch as the spots obtained.

3. Method according to Claim 3, **characterised in that** the suction tool (10) picks up and transports the spacers (4) previously disposed on a tray (9) and **in that** it deposits them on the spots of enamel by stopping the suction.

4. Method according to one of the preceding claims, **characterised in that** pressure is exerted during the sealing.

5. Method according to one of Claims 1 to 4, **characterised in that**, during the vacuum production phase, an obturator (17, 5) is maintained close to the hole so as to allow air to pass and **in that** the said obturator can be welded to the glass.

6. Method according to one of Claims 1 to 4, **characterised in that**, before the vacuum production step, a ring (17) of enamel based on silver is produced around the hole (15), **in that**, after baking, the said ring is tinned and **in that** it is partially soldered to a tinned mineral disc or slug (5).

7. Method according to Claim 6, **characterised in that**, during the vacuum production phase, the temperature is raised locally around the hole (15) until the tin is fused.

8. Method according to any one of the preceding claims, **characterised in that** the spacers (4) are bitruncated spheres with parallel faces made from ceramic material.

9. Method according to Claim 8, **characterised in that** the bitruncated spheres with parallel faces are obtained from balls distributed in a single layer, embedded in a material which can be poured and **in that** spacers can be separated subsequently by thermal and/or chemical and/or mechanical actions, and **in that** the said layer is eroded on both faces.

10. Method according to any one of the preceding claims, **characterised in that** the sealing joint (6) is an enamel whose baking temperature is below 450°C.

11. Method according to any one of the preceding claims, **characterised in that** at least one of the sheets of glass (2, 3) has undergone a heat toughening treatment.

12. Method according to any one of the preceding claims, **characterised in that** at least one sheet of glass (2, 3) is covered with one or more functional layers on at least one of its faces.
